# EUROPEAN PATENT APPLICATION

(11) **EP 1 998 582 A1**
(43) Date of publication of application: **03.12.2008**
(21) Application number: 07739013.6
(22) Date of filing: 19.03.2007
(51) Int. Cl.: H04Q 7/36, H04J 1/00

(54) **RADIO ACCESS NETWORK APPARATUS AND METHOD**

(30) Priority: 20.03.2006 JP 2006077823
(71) Applicant: NTT DoCoMo, Inc., Chiyoda-ku Tokyo 100-6150 (JP)
(72) Inventor: MORIMOTO, Akihito, Tokyo 100-6150 (JP); KAWAI, Hiroyuki, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/055570
(87) International publication number: WO 2007/108449

(57) **Abstract**

A radio access network apparatus includes: means configured to determine whether a mobile station belongs to a region at a cell edge; and means configured to assign a cell edge frequency to a mobile station at the cell edge, and assign a non-cell edge frequency that is different from the cell edge frequency to a mobile station in a region other than the cell edge. The cell edge frequency includes a first band that is different for each cell. The non-cell edge frequency includes a second band common to a plurality of cells including the own cell and a third band equal to a cell edge frequency of an adjacent cell.

## Description

### TECHNICAL FIELD

The present invention generally relates to a technical field of mobile communication. More particularly, the present invention relates to a radio access network apparatus and the method.

### BACKGROUND ART

In a conventional mobile communication system of a time division multiple access (TDMA) scheme, frequencies that are different with each other are used in adjacent cells. A group of frequencies are used for a set of cells, and the same group of frequencies are used in another set of cells that is geographically apart from the set of cells. Although such a method is preferable in view of decreasing other cell interference, frequency use efficiency is not high.

On the other hand, in the W-CDMA scheme such as IMT-2000, users are distinguished by using spread codes so that a same frequency is used for all cells and "one cell frequency reuse" is realized. Accordingly, the frequency use efficiency and the system capacity largely increase. However, since the same frequency is used among adjacent cells, a problem that interference level at a cell edge tends to become large is a concern. As to this problem, a technique called interference coordination is proposed. In this technique, in addition to that a frequency common to all cells is used, different frequencies are used for each cell at the cell edge.

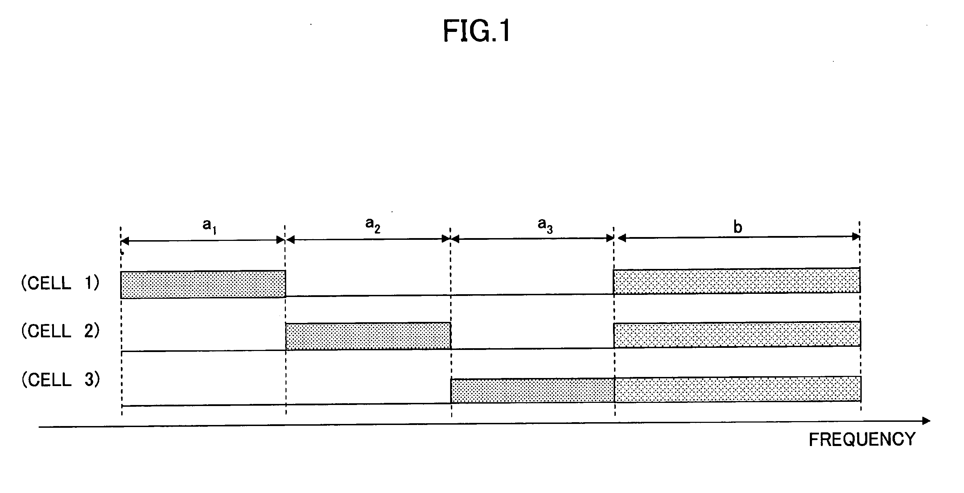

Fig.1 shows a frequency use situation when the interference coordination is performed. The frequency band b is a band common to all cells, and frequency bands a1, a2 and a3 are used separately by each cell. For the sake of convenience of representation, the frequencies a1, a2, a3 and b are depicted such that they have similar bands. But, it should be noted that, in actuality, the frequency band b is very wide, and the frequency bands a1, a2 and a3 are relatively narrow. The frequency bands a1, a2 and a3 are frequencies to be assigned to users at cell edges, and the frequency band b is a frequency to be assigned to a user (a user located near a base station, for example) in a region other than the cell edge. The frequency a1 is used for a user belonging to the cell edge of the cell 1, so that the frequency a1 is not used in adjacent cells. Similarly, the frequency a2 is used for a user belonging to the cell edge of the cell 2, so that the frequency a2 is not used in adjacent cells. The frequency a3 is used for a user belonging to the cell edge of the cell 3, so that the frequency a3 is not used in adjacent cells. Therefore, each user at the cell edge of the cell 1, cell 2 and cell 3 can perform communication under a small interference state. The interference coordination is described in the non-patent document 1, for example. [Non-patent document 1] 3GPP R1-060670, Siemens, "Interference Mitigation by Partial Frequency Reuse"

### DISCLOSURE OF THE INVENTION

### PROBLEM TO BE SOLVED BY THE INVENTION

In the interference coordination, the frequencies a1, a2 and a3 for users at the cell edge are exclusively used in the cells 1, 2 and 3 respectively. Therefore, there is a problem in that use efficiency of frequencies to be assigned to users at the cell edge is not good. In addition, there may be a situation in which it is difficult to clearly set frequency bands a1, a2 and a3 for each cell. Also, there is a problem that interference is not sufficiently suppressed in a communication environment in which cell boundary is not clear according to circumstances and it is difficult to clearly determine a frequency beforehand to be used at the cell edge.

An object of the present invention is to provide a radio access network apparatus and a method for improving frequency use efficiency at the cell edge and sufficiently suppressing other cell interference.

### MEANS FOR SOLVING THE PROBLEM

In the present invention, a radio access network apparatus is used, wherein the radio access network apparatus includes: means configured to determine whether a mobile station belongs to a region at a cell edge; and means configured to assign a cell edge frequency to a mobile station at the cell edge, and assign a non-cell edge frequency that is different from the cell edge frequency to a mobile station in a region other than the cell edge. The cell edge frequency includes a first band that is different for each cell. The non-cell edge frequency includes a second band common to a plurality of cells including the own cell and a third band equal to a cell edge frequency of an adjacent cell.

### EFFECT OF THE INVENTION

According to the present invention, frequency use efficiency at the cell edge can be improved and other cell interference can be sufficiently suppressed.

### BRIEF DESCRIPTION OF THE DRAWINGS

Fig.1 is a diagram showing a frequency assignment example in conventional frequency coordination;
Fig.2 is a diagram showing a mobile station and a base station according to an embodiment of the present invention;
Fig.3 is a diagram showing a situation for grouping mobile stations according to interference power;
Fig.4A is a diagram showing correspondence relationship (1) between resource blocks and transmission power;
Fig.4B is a diagram showing correspondence relationship (2) between resource blocks and transmission power;
Fig.5 is a diagram showing a mobile station and a base station according to an embodiment of the present invention;
Fig.6 is a diagram showing correspondence relationship among mobile stations, resource blocks and transmission power;
Fig.7 is a diagram showing a mobile station, a base station and an upper station according to an embodiment of the present invention;
Fig.8 is a diagram showing a frequency assignment example according to an embodiment of the present invention;
Fig.9 is a diagram showing a frequency assignment example according to an embodiment of the present invention;
Fig.10 is a diagram showing a mobile station, a base station and an upper station according to an embodiment of the present invention;
Fig.11 is a diagram for explaining operation according to an embodiment of the present invention.

### Description of reference signs

21 reception quality measurement unit
22, 23 reception quality reporting unit
24 base station includes a grouping control unit of each UE
25 determination unit for determining transmission power for each group and a number of resource blocks (RB number) to be assigned
26 transmission power determination unit for RB
27 frequency scheduling unit
28 transmission power correction unit

### PREFERRED EMBODIMENTS FOR CARRYING OUT THE INVENTION

According to an embodiment of the present invention, a cell edge frequency is assigned to a mobile station at the cell edge, and a non-cell edge frequency that is different from the cell edge frequency is assigned to a mobile station in a region other than the cell edge. The cell edge frequency includes a first band that is different for each cell. The non-cell edge frequency includes a second band common to a plurality of cells including the own cell and a third band equal to a cell edge frequency of an adjacent cell. Transmission power of a signal transmitted using the second band may be set to be smaller than transmission power of a signal transmitted by the first band. Transmission power of a signal transmitted using the first band or the second band may be set to be and greater than transmission power of a signal transmitted by the third band. Accordingly, other cell interference can be suppressed while improving frequency use efficiency in the cell edge.

The radio access network apparatus may or may not include an apparatus (upper station) in an upper side of the base station. From the viewpoint for suppressing other cell interference with reliability, it is desirable that the upper station controls assignment of frequency and transmission power.

From the viewpoint of easily determining whether the mobile station resides in the cell edge, whether the mobile station belongs to the cell edge may be determined based on interference power of downlink reported from the mobile station.

In addition, total transmission power of each cell may be arranged to be a given level.

From the viewpoint of suppressing other cell interference at the cell edge with reliability, it is desirable that control is performed such that signal transmission using the first band in a cell and signal transmission using the third band in an adjacent cell are performed at different times.

### [Embodiment 1]

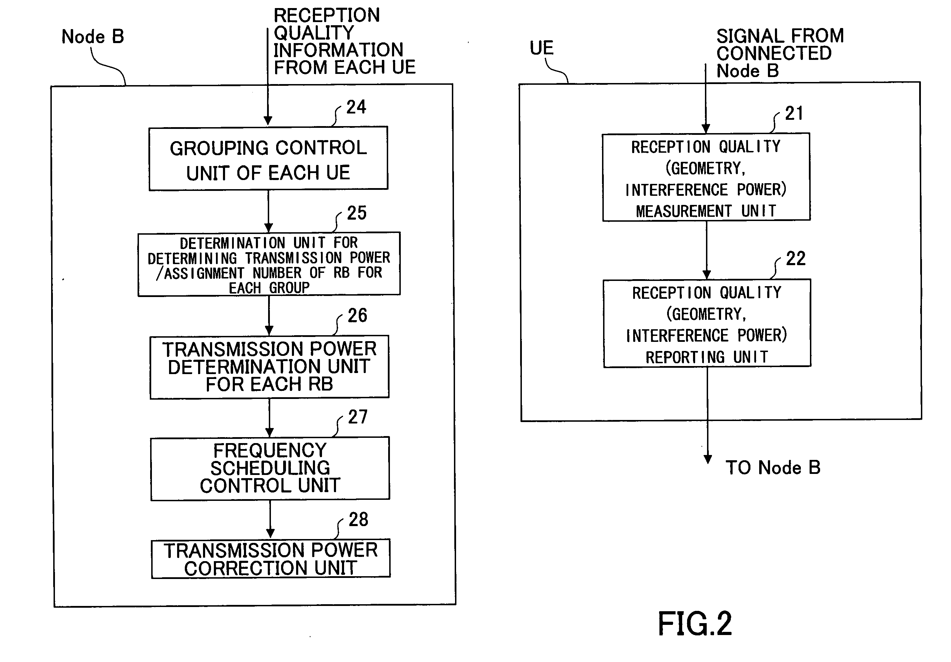

Fig.2 shows a mobile station UE and a base station or a Node B according to an embodiment of the present invention. The mobile station includes a reception quality measurement unit 21 and a reception quality reporting unit 22. The reception quality measurement unit 21 measures quality of a signal (downlink pilot channel, for example) received from the base station. The quality may be represented as various amounts, and it may be represented as interference power, geometry, and other proper channel state information CQI (Channel quality indicator). The reception quality reporting unit 22 transmits the measurement value to the base station.

The base station includes a grouping control unit 24 of each UE, a determination unit 25 for determining transmission power for each group and a number of resource blocks (RB number) to be assigned, a transmission power determination unit 26 for each RB, a frequency scheduling unit 27 and a transmission power correction unit 28.

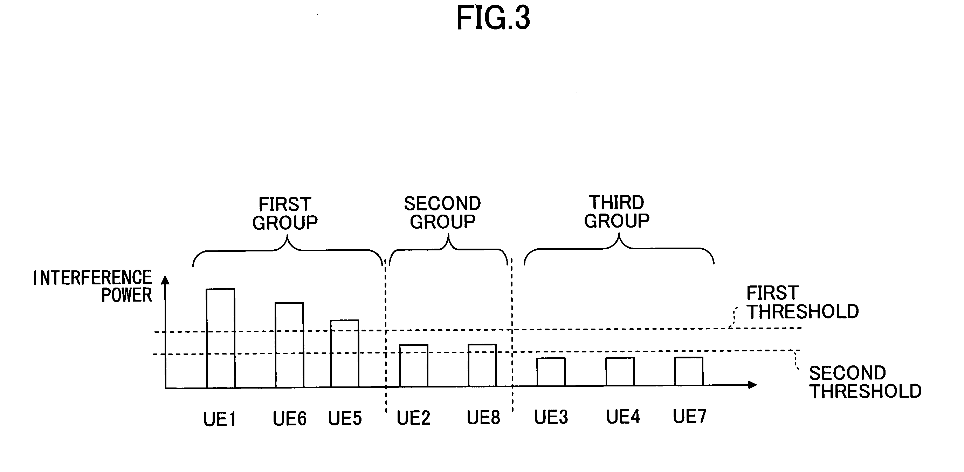

The grouping control unit 24 for each UE divides UEs to one or more groups based on reception quality reported from each UE. For example, as shown in Fig.3, UE1-8 are divided into three groups based on interference power reported from each of the UE1-8. The grouping may be determined based on whether the interference power exceeds a threshold. In the example shown in the figure, two thresholds are prepared so that three groups are formed, but, the number of prepared thresholds and the number of the groups may be any numbers. In Fig.3, interference power of UE1, UE6 and UE5 exceeds a first threshold value and they belong to a first group. Typically, each mobile station belonging to the first group is located at a cell edge. Interference power of UE2 and UE8 are below the first threshold, but exceeds the second threshold, and they belong to a second group. Interference power of other mobile stations is below the second threshold, and the mobile stations belong to the third group. Typically, the mobile stations belonging to the third group are located near the base station or located at a place where visibility is good.

The determination unit 25 for determining transmission power for each group and the number of RBs determines transmission power for each group according to a group determination result in the grouping control unit 24. Generally, large transmission power is required for UEs belonging to a group of large interference power, and only small transmission power is necessary for UEs belonging to a group of small interference power. The determination unit 25 determines the number of resource blocks (number of RBs) to be assigned to UE1-8. In the present embodiment, a frequency block of a narrow bandwidth is used as a unit of radio resources for assignment, so that the mobile station performs communication using one or more resource blocks depending on the channel state and data amount.

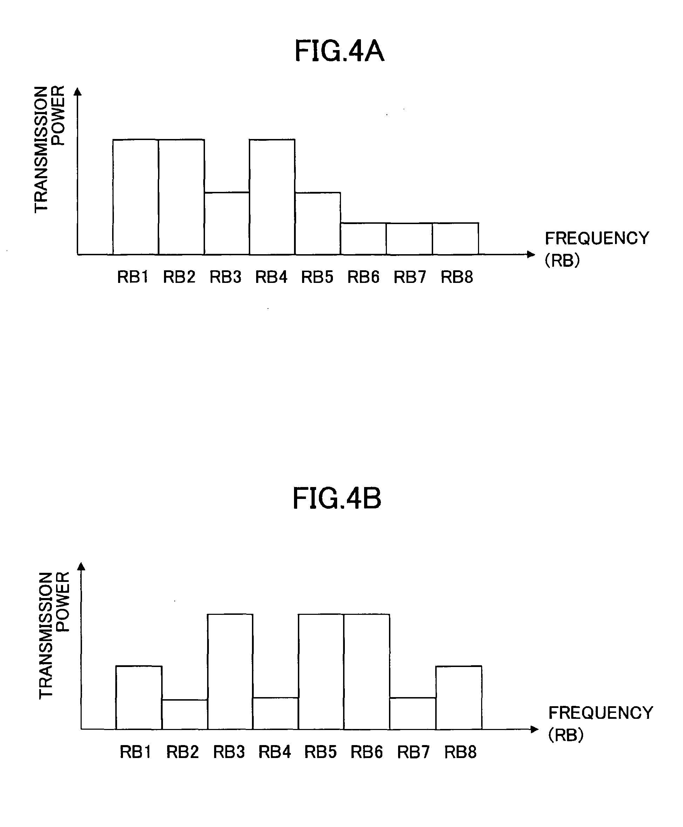

The RB transmission power determination unit 26 associates each value of determined transmission power with a resource block. However, it is not determined which mobile station UE corresponds to which transmission power value at this stage. Each base station individually determines which resource block corresponds to which transmission power value, and it may be variously determined as shown in Fig.4A and 4B. In the example shown in the figure, although eight resource blocks corresponding to the total number (8) of mobile stations are shown for the sake of simplicity, resource blocks more than those shown in the figure may be used since a mobile station can use one or more resource blocks as mentioned above. Correspondence relationship (or assignment pattern) between resource blocks and transmission power values may be changed in each base station as necessary.

The frequency scheduling unit 27 determines which resource block is assigned to each mobile station in consideration of not only quality of the channel state of each resource block reported from each mobile station but also the transmission power value determined for each resource block. The point that the scheduling is performed in consideration of the transmission power value is largely different from conventional frequency scheduling. More particularly, since interference power of UE1, UE6 and UE5 belonging to the first group is large as a result of group determination, it is desirable to assign resource blocks of large transmission power for the first group. Since interference power of UE3, UE4 and UE7 belonging to the third group is small, resource blocks of small transmission power can be assigned. It is desirable to assign, to UE2 and UE8 belonging to the second group, resource blocks of power smaller than the transmission power of the first group and larger than the transmission power of the third group.

More particularly, when the transmission power assignment pattern shown in Fig.4A is used, it is desirable that RB1, RB2 and RB4 are assigned to UE1, UE6 and UE5, RB3 and RB5 are assigned to UE2 and UE8, and that RB6, RB7 and RB8 are assigned to UE3, UE4 and UE7. Similarly, when the transmission power assignment pattern shown in Fig.4B is used, it is desirable that RB3, RB5 and RB6 are assigned to UE1, UE6 and UE5, RB1 and RB8 are assigned to UE2 and UE8 respectively, and that RB2, RB4 and RB7 are assigned to UE3, UE4 and UE7. More detailed correspondence relationship between mobile stations and resource blocks is determined according to channel states. For example, when RB1, RB2 and RB4 are assigned to UE1, UE6 and UE5 in the pattern of Fig.4A, any of RB1, RB2 and RB4 is assigned according to channel state of each resource block in UE1. In the above-mentioned example, for example, although UE1, UE6 and UE5 are basically assigned to RB1, RB2 and RB4, there is a case in which it is desirable that they are assigned to other resources according to instantaneous channel state since actual resource assignment is performed by frequency scheduling (this holds true also in the after-mentioned third embodiment).

When transmitting a signal to each mobile station using the determined transmission power (strictly speaking, power ratio), the transmission power correction unit 28 performs adjustment as necessary according to total transmission power. For example, when an arrangement has been made such that total transmission power becomes the same among cells, the power value is corrected such that the transmission power pattern is realized within a range of the total transmission power.

According to the present embodiment, an assignment pattern (Figs.4A and 4B) of transmission power used for each resource block is determined in each cell individually. Therefore, as long as assignment patterns are different among cells, interference to be received by mobile stations located at the cell edge is suppressed small. For example, assuming that the pattern of Fig.4A is used in the first cell and that the pattern of Fig.4B is used in the adjacent second cell. In this case, a signal is transmitted to mobile stations located at the cell edge of the first cell with large transmission power using the frequency of RB1, RB2, RB4. On the other hand, a signal is transmitted to mobile stations located at the cell edge of the second cell with large transmission power using the frequency of RB3, RB5, RB6. Therefore, the mobile stations at the cell edge do not receive large interference from an adjacent cell. Mobile stations located at the edge of the first cell uses frequencies of RB1, RB2 and RB4. Although the frequencies are also used in the second cell, since the second cell uses the frequencies by suppressing transmission power to be small, it can be considered that the frequencies do not exert large interference on the edge of the first cell. Similarly, mobile stations located at the edge of the second cell use frequencies of RB3, RB5 and RB6. Although the frequencies are also used in the first cell, since the first cell uses the frequencies by suppressing transmission power to b small, it can be considered that the frequencies do not exert large interference on the edge of the second cell. According to the present embodiment, frequency use efficiency can be improved while effectively suppressing interference also at the cell edge.

### [Embodiment 2]

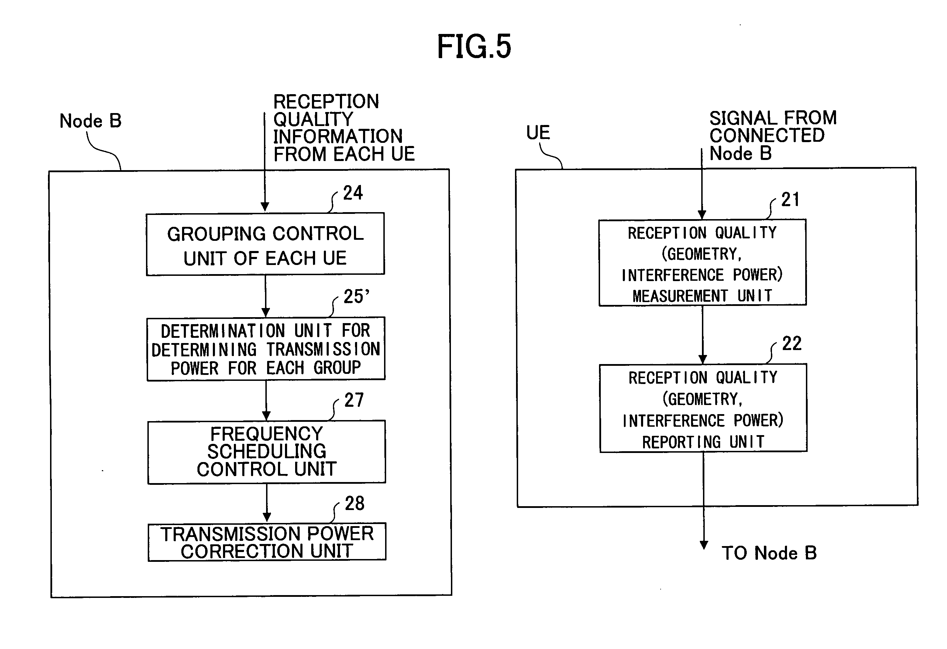

Fig.5 shows a mobile station UE and a base station (node B) according to an embodiment of the present invention. Similar to the example shown in Fig.2, the mobile station includes the reception quality measurement unit 21 and the reception quality reporting unit 22, and repeated explanations are not given. In addition, similar to the example shown in Fig.2, the base station includes the grouping control unit 24 of each UE, a transmission power determination unit 25' for determining transmission power for each group, the frequency scheduling unit 27 and the transmission power correction unit 28.

The grouping control unit 24 for each UE divides UEs to one or more groups based on reception quality reported from each UE.

The transmission power determination unit 25' for each group determines transmission power for each group according to a group determination result in the grouping control unit 24. Generally, large transmission power is required for UEs belonging to a group of large interference power, and only small transmission power is necessary for UEs belonging to a group of small interference power. Assuming that grouping is performed as shown in Fig.3, determination is performed such that large transmission power P1 is used for UE1, UE6 and UE5 of the first group, intermediate transmission power P2 is used for UE2 and UE8 for the second group, and small transmission power P3 is used for UE3, UE4 and UE7 of the third group. However, which resource block is associated with which mobile station UE is not determined by the transmission power determination unit 25', and it is determined by the frequency scheduling unit 27.

The frequency scheduling unit 27 determines which resource block is assigned to each mobile station in consideration of quality of the channel state of each resource block reported from each mobile station.

Although the figure is depicted such that processing of the frequency scheduling unit 27 is performed after the processing of the transmission power determination unit 25' for the sake of convenience of explanation, the order may be one as shown in the figure, may be reversal, or the whole or a part of the processing may be performed simultaneously since the processes can be performed independently. In all cases, performing transmission using which resource block with what degree of transmission power to which mobile station is determined based on both process results.

When transmitting a signal to each mobile station using the determined transmission power (strictly speaking, power ratio), the transmission power correction unit 28 performs adjustment as necessary according to total transmission power. For example, when an arrangement has been made such that total transmission power becomes the same among cells, the power value is corrected such that the transmission power pattern is realized within a range of the total transmission power.

Also, according to the present embodiment, an assignment pattern of transmission power used for each resource block is determined in each cell individually. Therefore, in the same way as the first embodiment, as long as assignment patterns are different among cells, interference to be received by mobile stations located at a cell edge is suppressed to be small.

However, assignment procedure for transmission power and resource blocks are slightly different from the case of the first embodiment. In the present embodiment, relationship between respective mobile station and transmission power is determined as one-to-one correspondence relationship according to the result of grouping irrespective of the frequency scheduling. This point is different from the method of the first embodiment in which frequency scheduling is performed while transmission power is taken into consideration. Then, separately from the transmission power, the frequency scheduling unit (scheduler) determines resource blocks to be assigned to each mobile station according to quality of channel state of each resource block reported from each mobile station.

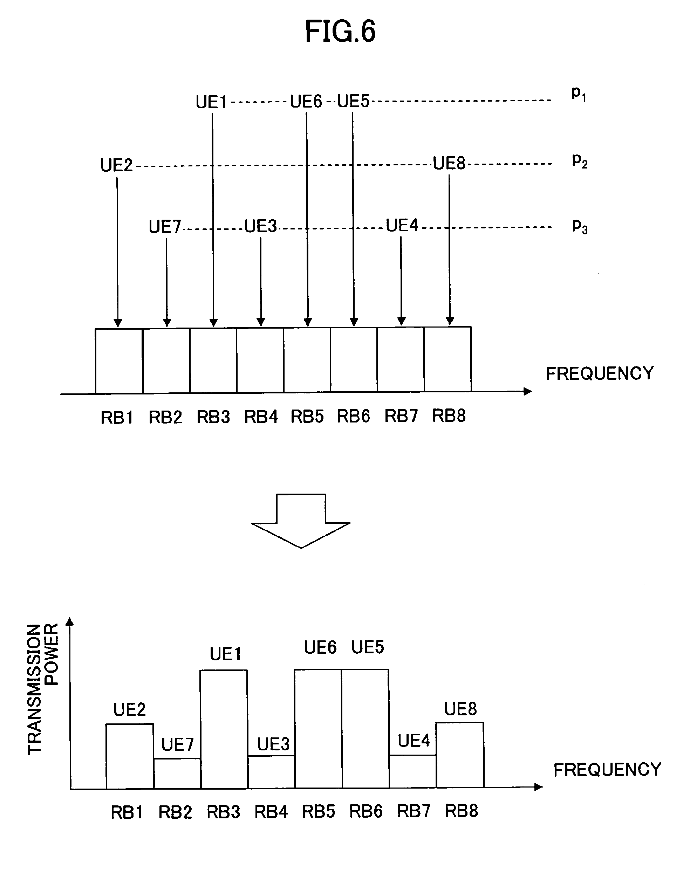

As shown in the upper side of Fig.6, transmission power P1, P2 and P3 for each UE is determined according to the result of grouping. Resource blocks used for each UE are separately determined according to channel state of each UE. These results are combined so that transmission power and assignment of resource blocks are determined for each mobile station as shown in the lower side of Fig.6B. Since the assignment pattern is determined independently in each cell, frequency use efficiency can be improved while effectively suppressing interference at the cell edge unless assignment patterns incidentally become the same among cells.

### [Embodiment 3]

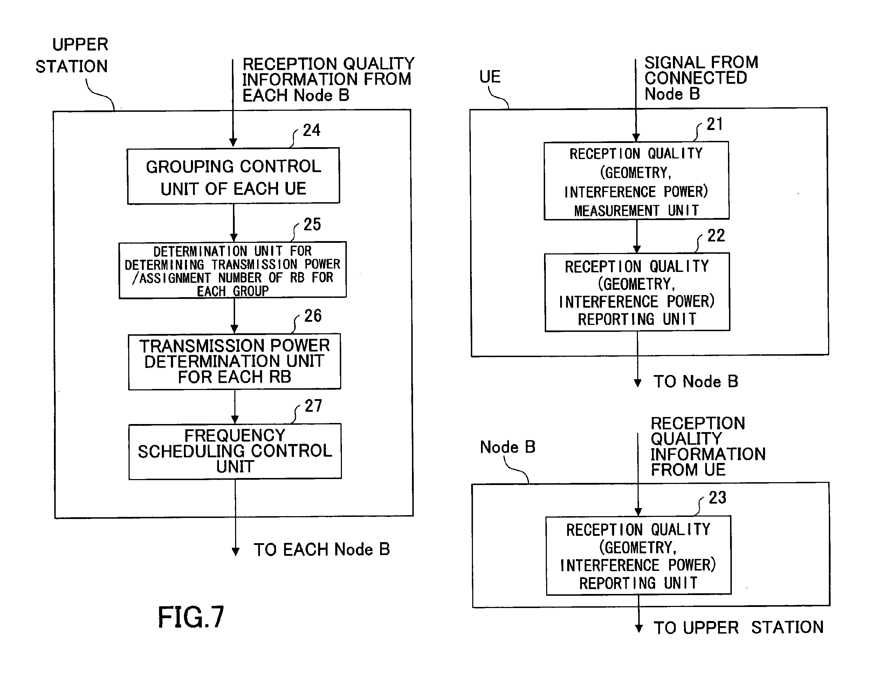

Fig.7 shows a mobile station UE and a base station (node B) according to an embodiment of the present invention. Similar to the example shown in Fig.2, the mobile station includes the reception quality measurement unit 21 and the reception quality reporting unit 22, and repeated explanations are not given. In the present embodiment, different from the first and the second embodiments, assignment of radio resources and transmission power is performed by an upper station of the base station such as a radio network controller (RNC), for example. The base station transfers, to the upper station, reception quality reported from the mobile station and measurement values measured in the own cell and the like using the reception quality reporting unit 23.

By the way, although assignment of radio resources and transmission power is performed in a radio access network apparatus (RAN) in all embodiments, the base station performs main processes in the first and second embodiments, and the upper station such as RNC performs main processes in the third embodiment and later embodiments.

The upper station includes the grouping control unit 24 of each UE, the determination unit 25 for determining transmission power for each group and a number of resource blocks (RB number) to be assigned, the transmission power determination unit 26 for each RB, the frequency scheduling unit 27 and the transmission power correction unit 28. The upper station includes configurations and functions similar to those of the base station of the first embodiment shown in Fig.2, but the upper station is different from the already described schemes in that assignment of transmission power and resource blocks is performed in consideration of not only the inside of the same cell but also a plurality of cells.

The grouping control unit 24 for each UE divides UEs to one or more groups based on reception quality reported from each UE. Grouping is performed for each cell.

The determination unit 25 for determining transmission power for each group and the number of assigning RBs determines transmission power for each group according to a group determination result in the grouping control unit 24. Generally, large transmission power is required for UEs belonging to a group of large interference power, and only small transmission power is necessary for UEs belonging to a group of small interference power. The determination unit also determines the number of resource blocks (number of RBs) to be assigned to the mobile station.

RB transmission power determination unit 26 associates each value of determined transmission power with each resource block individually. However, which mobile station UE corresponds to which transmission power value is not determined at this stage. It is determined by the frequency scheduling unit 27.

The frequency scheduling unit 27 determines which resource block is assigned to which mobile station in consideration of quality of the channel state of each resource block reported from each mobile station and the determined transmission power value.

When transmitting a signal to each mobile station using the determined transmission power (strictly speaking, power ratio), the transmission power correction unit 28 performs adjustment as necessary according to total transmission power.

In the present embodiment, the assignment patterns of the transmission power used for each resource block are determined such that assignments are different among cells. This point is different from the scheme of the first and the second embodiments in which the pattern is determined in each cell individually. Therefore, it can be maintained with reliability that the assignment patterns are different among cells, so that frequency use efficiency can be improved while effectively suppressing interference also at the cell edge.

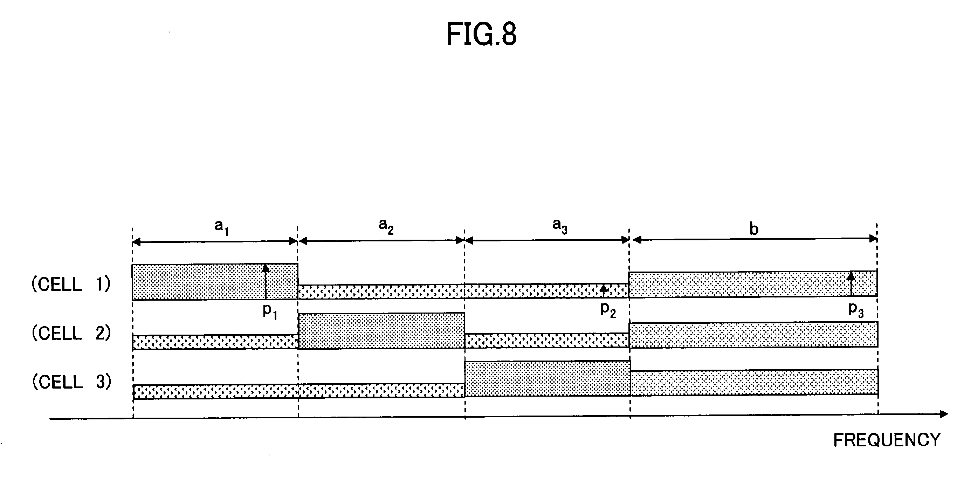

Fig.8 shows a frequency use state in which the present embodiment is used. The frequency band b is a band common to all cells, and frequency bands a1, a2 and a3 are bands to be used by uses at a cell edge of each cell. In the present embodiment, in addition to that, frequency bands a1, a2 and a3 are set so as to be also assigned to users other than users at the cell edge. The frequency a1 is used for users belonging to the cell edge of cell 1. Although the frequency a1 is also used in adjacent cells 2 and 3, the frequency a1 is used only for users near a base station of the cell 2 and users near the base station of cell 3. As shown in the figure, in the cell 1, transmission power p1 of the frequency a1 is the largest, and the transmission power p2 of the frequency b is the second largest, and the transmission power p3 of the frequencies a2 and a3 are set to be the smallest. Therefore, the frequency a1 used in the cell 2 and cell 3 is considered not to exert large interference to users at the cell edge of cell 1. In the same way, since the frequency a2 used in the cell 1 and the cell 3 is used only by users near base stations, it can be considered that the frequency a2 used by the cell 1 and the cell 3 does not exert large interference to users at cell edge of the cell 2 using the frequency a2. Since the frequency a3 used in the cell 1 and the cell 2 is used only by users near base stations, it can be considered that the frequency a3 used by the cell 1 and the cell 3 does not exert large interference on users at cell edge of the cell 3 using the frequency a3. The frequency bandwidth may be changed as necessary according to necessary traffic amount and channel status. According to the present embodiment, by collectively managing the use pattern of frequencies and the transmission power in each cell, interference can be suppressed at the cell edge and frequency use efficiency can be improved. In addition, even in a situation in which it is difficult to properly set frequency bands a1, a2 and a3 in individual cells, since the frequencies are determined by the upper station controlling each cell, interference at the cell edge can be decreased more effectively.

### [Embodiment 4]

In the fourth embodiment of the present invention, the base station measures interference power from the adjacent cell, and reports the measurement result to the upper station in addition to reported values from mobile stations. The upper station includes configurations and functions the same as those of the third embodiment, and groups mobile stations for each cell, specifies necessary transmission power values and resource blocks, and determines correspondence relationship between transmission power and resource blocks. In this case, an assignment pattern is determined such that, as to a resource block for which large transmission power is set in a cell, small transmission power is set in other cell.

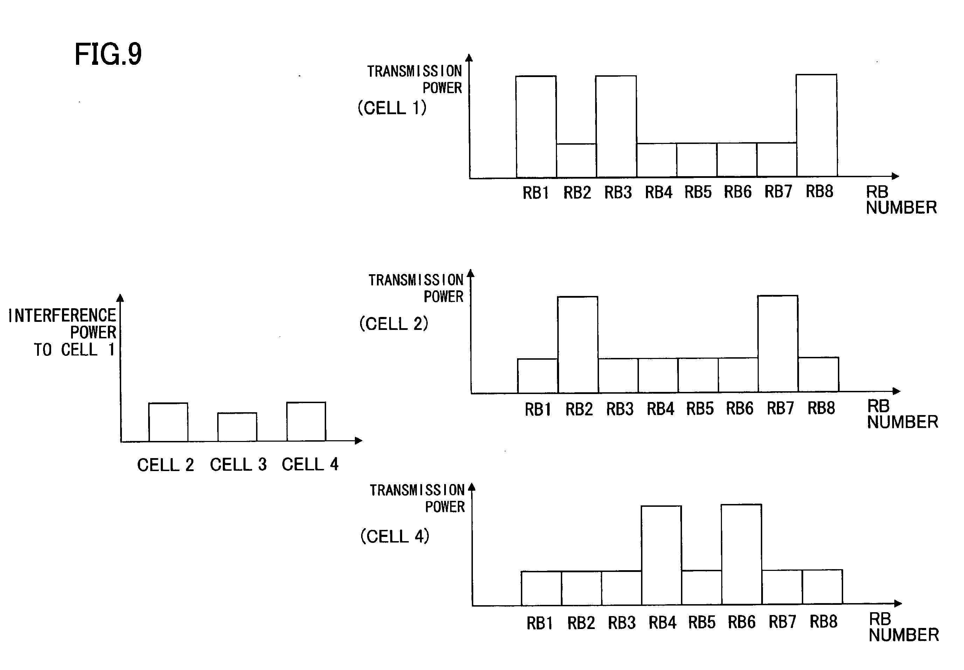

Fig.9 shows a situation in which an assignment pattern is determined and shows other cell interference amount in the cell 1. First, assuming that correspondence relationship between resource blocks RB and transmission power is determined in the cell 1. Since the cell 2 gives large interference to the cell 2, consideration is given such that large transmission power is not used for a same resource block between the cell 1 and the cell 2. In the cell 1, large transmission power is used for RB1, RB3 and RB8, and consideration is given such that large transmission power is not used for these resource blocks in the cell 2. As a result, large transmission power is used for RB2 and RB7 in the cell 2. In the same way, also as to cell 4 that exerts large interference effect to cell 1, consideration is given such that large transmission power is not used in the same resource blocks. Since large transmission power is used for RB1, RB3, RB8 and RB2, RB7 in cells 1 and 2 respectively, consideration is given such that large transmission power is not used for these resource blocks in cell 4. As a result, large transmission power is used for RB4 and RB6 in cell 4. As mentioned above, by giving consideration to cells having large interference effect in order, interference amount can be effectively decreased in the whole system.

### [Embodiment 5]

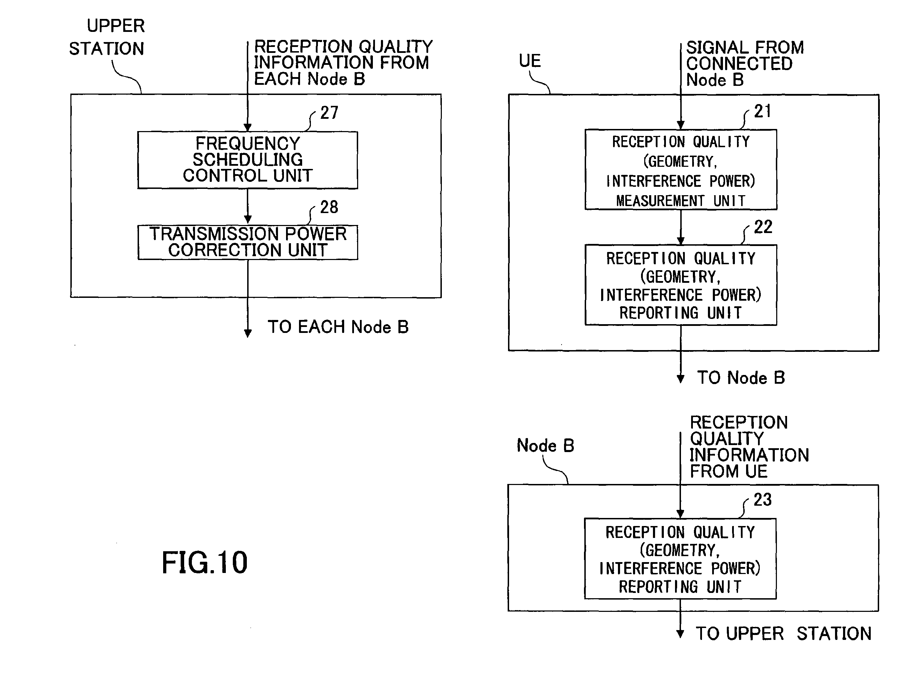

Fig.10 shows a mobile station UE and a base station (node B) according to an embodiment of the present invention. Similar to the example shown in Fig.2, the mobile station includes the reception quality measurement unit 21 and the reception quality reporting unit 22, and repeated descriptions are not given. Also in this embodiment, assignment of radio resources and transmission power is performed in the upper station of the base station. The base station transfers reception quality reported from the mobile station and measurement values and the like measured in the own cell to the upper cell using the reception quality reporting unit 23.

The upper station includes the frequency scheduling unit 27 and the transmission power correcting unit 28.

The frequency scheduling unit 27 determines which resource block is to be assigned to each mobile station according to quality of the channel state of each resource block reported from each mobile station and the determined transmission power value.

Since the frequency scheduling unit 27 is provided in the upper station of the base station, frequency scheduling for one or more cells under the upper station is performed collectively.

When transmitting a signal to each mobile station using the determined transmission power (strictly speaking, power ratio), the transmission power correction unit 28 performs adjustment as necessary according to total transmission power.

In the present embodiment, an active set is defined as to mobile stations at the cell edge. Similar to the active set when performing handover, this active set includes a connected cell of the mobile station at the cell edge and a cell adjacent to the connected cell.

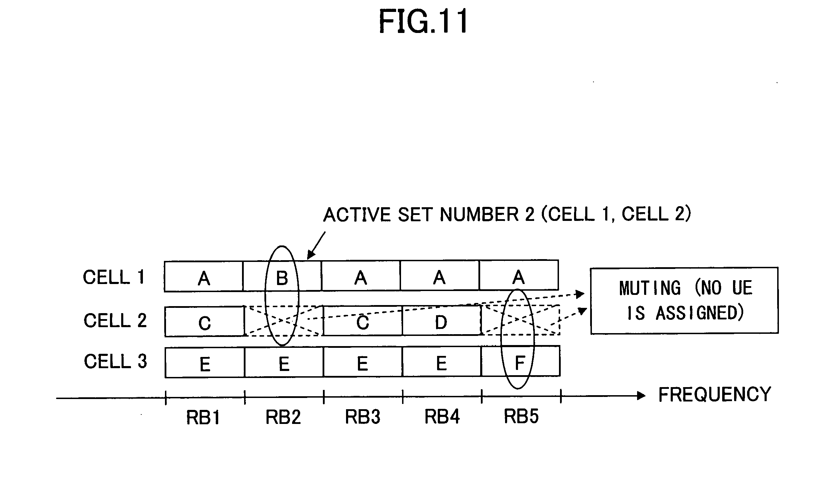

Fig.11 is a figure for explaining operation according to the present embodiment. As an example, assuming that users A and B belong to the cell 1, users C and D belong to the cell 2, and users E and F belong to the cell 3, and user B and user F are located at cell edge. In addition, the active set number is 2 respectively. That is, the active set for the user B is cell 1 and cell 2, and the active set for user F is cell 3 and cell 2.

When resource assignment in the cell 1 is determined as shown in Fig.11, resource assignment in the cell 2 is determined next. The resource block RB2 is assigned to the user B at the cell edge in the cell 1. In this case, a cell included in the active set is configured not to transmit a signal using the resource block RB2. In the example shown in the figure, the cell 2 prohibits signal transmission using RB2 (to be also referred to as muting). Similarly, in the example shown in the figure, the resource block RB5 is used by a user F at the cell edge in the cell 3. Therefore, signal transmission using the RB5 is prohibited in the cell 2 that is included in an active set. As mentioned above, among cells included in an active set, consideration is given such that the frequency used for a user at the cell edge is not used at the same time. Accordingly, although improvement effect of frequency use efficiency falls compared with that of the above-mentioned embodiment, interference can be suppressed with reliability by just that much. Although higher priority is given to assignment for users at the cell edge in the above example, higher priority may be given to assignment for users near the cell inversely.

For the sake of explanation, although the present invention is described by being divided to some embodiments, the division to each embodiment is not essential for the present invention, and equal to or greater than one embodiment may be used as necessary. As mentioned above, although preferred embodiments of the present invention are described, the present invention is not limited to those, and various variations and modifications may be made without departing from the scope of the present invention. For the sake of explanation, although the present invention is described by being divided to some embodiments, the division to each embodiment is not essential for the present invention, and equal to or greater than two embodiment may be used as necessary.

The present international application claims priority based on Japanese patent application No.2006-077823, filed in the JPO on March 20, 2006 and the entire contents of the Japanese patent application No.2006-077823 is incorporated herein by reference.

## Claims

1. A radio access network apparatus comprising:
means configured to determine whether a mobile station belongs to a region at a cell edge;
means configured to divide a frequency band used in a system in accordance with a ratio between a number of mobile stations at the cell edge and a number of mobile stations in a region other than the cell edge, and set different transmission power for each divided band; and
means configured to perform frequency scheduling for assigning radio resources to the mobile station.

2. The radio access network apparatus as claimed in claim 1, wherein
a cell edge frequency is assigned to a mobile station at the cell edge, and a non-cell edge frequency that is different from the cell edge frequency is assigned to a mobile station in a region other than the cell edge,
the cell edge frequency includes a first band that is different for each cell, and
the non-cell edge frequency includes a second band common to a plurality of cells including the own cell and a third band equal to the cell edge frequency of an adjacent cell.

3. The radio access network apparatus as claimed in claim 1, wherein transmission power of a signal transmitted using the second band is smaller than transmission power of a signal transmitted by the first band and greater than transmission power of a signal transmitted by the third band.

4. The radio access network apparatus as claimed in claim 1, wherein whether a mobile station belongs to the cell edge is determined based on interference power of downlink reported from the mobile station.

5. The radio access network apparatus as claimed in claim 1, wherein total transmission power of each cell is arranged to be a given level.

6. The radio access network apparatus as claimed in claim 1, wherein control is performed such that signal transmission using the first band in a cell and signal transmission using the third band in an adjacent cell are performed at different times.

7. A method used in a radio access network apparatus comprising:
a step of determining whether a mobile station belongs to a region at a cell edge;
a step of dividing a frequency band used in a system in accordance with a ratio between a number of mobile stations at the cell edge and a number of mobile stations in a region other than the cell edge, and setting different downlink transmission power for each divided band; and
a step of performing frequency scheduling for assigning radio resources to the mobile station.

8. The method as claimed in claim 7, wherein the transmission power set for each divided band is determined by each base station independently.

9. The method as claimed in claim 7, wherein correspondence relationship between mobile stations and downlink transmission power, and assignment content of radio resources are determined separately.

10. The method as claimed in claim 7, wherein a boundary for dividing the frequency band is controlled such that the boundary changes according to a traffic amount.

11. The method as claimed in claim 7, wherein, when different downlink transmission power is assigned for each divided band, transmission power is assigned such that interference between adjacent cells becomes small.

12. The method as claimed in claim 7, wherein, when different downlink transmission power is assigned for each divided band, signal transmission is prohibited in one of adjacent cells.
